(19) Europäisches Patentamt
European Patent Office
Office européen des brevets

(11) **EP 4 764 959 A1**

(12) **EUROPEAN PATENT APPLICATION**

(43) Date of publication:
24.06.2026 Bulletin 2026/26

(21) Application number: 25221843.3

(22) Date of filing: **09.12.2025**

(51) International Patent Classification (IPC):
*G06N 3/09* (2023.01)  *G06N 3/098* (2023.01)

(52) Cooperative Patent Classification (CPC):
G06N 3/098; G06N 3/09

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.12.2024 KR 20240193233**

(71) Applicant: **UNIVERSITY-INDUSTRY COOPERATION GROUP OF KYUNG HEE UNIVERSITY**
Yongin-si, Gyeonggi-do 17104 (KR)

(72) Inventors:
• **HONG, Choong Seon**
16941 Yongin-si, Gyeonggi-do (KR)
• **LE, Quang Huy**
16705 Suwon-si, Gyeonggi-do (KR)
• **KIM, Hyeonsu**
13608 Seongnam-si, Gyeonggi-do (KR)

(74) Representative: **Isarpatent**
**Patent- und Rechtsanwälte PartG mbB**
**Friedrichstraße 31**
**80801 München (DE)**

(54) **FEDERATED LEARNING METHOD AND SYSTEM FOR REDUCING DOMAIN SKEW BETWEEN CLIENTS**

(57) Disclosed are a federated learning method and system that can reduce domain skew between clients. The federated learning system according to an embodiment of the present disclosure includes a plurality of clients and a server, and each client is configured to input local data into a feature extractor to extract a feature vector, input the feature vector into a classifier to perform classification for a class of the local data, and train a local model, which includes the feature extractor and the classifier, using a first loss function based on a difference between an output value of the classifier and a preset correct value and a second loss function for contrastive learning between the feature vector and the generalized prototype of each class.

## FIG. 1

**Description**

CROSS-REFERENCE TO RELATED APPLICATION

This application claims the benefit under 35 USC §119(a) of Korean Patent Application No. 10-2024-0193233, filed on ,2024-12-20 , in the Korean Intellectual Property Office, the entire disclosure of which is incorporated herein by reference for all purposes.

BACKGROUND

**1. Field**

Embodiments of the present disclosure relate to federated learning that can reduce domain skew between clients.

**2. Description of Related Art**

Federated Learning (FL) is a widely studied distributed machine learning framework that enables multiple clients to jointly train models while maintaining data privacy. However, federated learning faces a major problem called data heterogeneity. That is, because data distributions across clients are non-independent and non-identical, learning performance becomes unstable, and the convergence of the global model becomes negatively impacted.

Accordingly, recent studies on federated learning are attempting to improve the efficiency of local training by utilizing regularization techniques or novel aggregation methods. However, existing studies only focus on the label shift problem under the assumption that client data is collected from the same domain. However, in real environments, data is often collected from different domains. For example, photographs and sketches of cats share the same label of "cat," but they belong to different domains, leading to heterogeneity in feature distributions across clients. This domain skew causes each client's local model to become domain-specific, ultimately degrading the generalization performance of the global model.

Examples of related art include Korean patent laid-open No. 2023-0114530 (2023.08.01)

**SUMMARY**

Embodiments of the present disclosure provide a federated learning method and system that can reduce domain skew between clients.

According to an embodiment of the present disclosure, there is provided a federated learning method performed on a computing device including one or more processors and a memory that stores one or more programs executed by the one or more processors and being a client that performs federated learning with a server, the federated learning method including inputting local data into a feature extractor to extract a feature vector, inputting the feature vector into a classifier to perform classification for a class of the local data, receiving a generalized prototype of each class from the server, and training a local model, which includes the feature extractor and the classifier, using a first loss function based on a difference between an output value of the classifier and a preset correct value and a second loss function for contrastive learning between the feature vector and the generalized prototype of each class.

The generalized prototype may be generated by readjusting a weight of an initial global prototype based on a distance between a local prototype of each class and the initial global prototype and the initial global prototype may be generated by aggregating local prototypes for each class of each client.

The generalized prototype may be generated by assigning a greater weight to the initial global prototype as the distance between the local prototype and the initial global prototype increases, and by assigning a smaller weight to the initial global prototype as the distance between the local prototype and the initial global prototype decreases.

The second loss function may cause the feature vector to be closer to a generalized prototype having the same class as the feature vector, and to be further away from a generalized prototype having a different class from the feature vector.

The federated learning method may further include generating an augmented prototype for each class based on the feature vector.

The generating of the augmented prototype may include generating augmented features by augmenting the feature vector and generating an augmented prototype for each class by calculating an average of the augmented features belonging to that class.

The federated learning method may further include training the local model using a third loss function based on a difference between the feature vector and the augmented prototype for each class.

According to another embodiment of the present disclosure, there is provided a federated learning method performed on a computing device including one or more processors and a memory that stores one or more programs executed by the one or more processors and being a server that performs federated learning with a plurality of clients, the federated learning method including receiving local prototypes for each class from clients, generating an initial global prototype of each class based on the local prototypes for each class received from the clients, generating a generalized prototype of each class by readjusting a weight for the initial global prototype, and transmitting the generalized prototype for each class to each of the clients.

In the generating of the generalized prototype, the generalized prototype may be generated by readjusting a weight of an initial global prototype based on a distance between the local prototype and the initial global prototype of each class.

In the generating of the generalized prototype, a greater weight may be assigned to the initial global prototype as the distance between the local prototype and the initial global prototype increases) and a smaller weight may be assigned to the initial global prototype as the distance

between the local prototype and the initial global prototype decreases.

According to another embodiment of the present disclosure, there is provided a federated learning system including a plurality of clients and a server, each client being configured to input local data into a feature extractor to extract a feature vector, input the feature vector into a classifier to perform classification for a class of the local data, and train a local model, which includes the feature extractor and the classifier, using a first loss function based on a difference between an output value of the classifier and a preset correct value and a second loss function for contrastive learning between the feature vector and the generalized prototype of each class.

Each client may be configured to generate local prototypes for each class based on the feature vector and transmits the local prototypes for each class to the server and the server may be configured to generate an initial global prototype of each class based on the local prototypes for each class received from the clients, generate a generalized prototype for each class by readjusting a weight for the initial global prototype, and transmit the generalized prototype of each class to each of the clients.

The server may be configured to generate the generalized prototype of each class by assigning a greater weight to the initial global prototype as a distance between the local prototype and the initial global prototype increases, and by assigning a smaller weight to the initial global prototype as the distance between the local prototype and the initial global prototype decreases.

Each client may be configured to generate augmented features by augmenting the feature vector and generate an augmented prototype of each class by calculating an average of the augmented features belonging to that class.

Each client may be configured to further training the local model using a third loss function based on a difference between the feature vector and the augmented prototype for each class.

## BRIEF DESCRIPTION OF THE DRAWINGS

FIG. 1 is a diagram illustrating the configuration of a federated learning system according to an embodiment of the present disclosure.
FIG. 2 is a diagram for describing the operation of a federated learning system according to an embodiment of the present disclosure.
FIG. 3 is a diagram illustrating a state in which a generalized prototype is generated by applying prototype reweighting to an initial global prototype in an embodiment of the present disclosure.
FIG. 4 is a flowchart illustrating a federated learning method according to an embodiment of the present disclosure.
FIG. 5 is a flowchart illustrating a federated learning method according to another embodiment of the present disclosure.
FIG. 6 is a block diagram illustrating a computing environment including a computing device suitable for use in exemplary embodiments.

## DETAILED DESCRIPTION

Hereinafter, specific embodiments of the present disclosure will be described with reference to the drawings. The following detailed description is provided to facilitate a comprehensive understanding of the methods, apparatuses, and/or systems described herein. However, this is only an example and the present disclosure is not limited thereto.

In describing embodiments of the present disclosure, if it is determined that a specific description of a related known function of the preset invention may unnecessarily obscure the gist of the present disclosure, the detailed description thereof will be omitted. The terms described below are terms defined in consideration of the functions in the present disclosure, and vary depending on the intention or custom of the user or operator. Therefore, the definition should be made based on the contents throughout this specification. The terminology used in the detailed description is for the purpose of describing embodiments of the present disclosure only and should not be construed as limiting. Unless expressly used otherwise, singular forms include plural forms. In this description, the terms "including" or "comprising" are intended to refer to certain features, numbers, steps, operations, elements, portions or combinations thereof, and should not be construed to exclude the presence or possibility of one or more other features, numbers, steps, operations, elements, portions or combinations thereof other than those described.

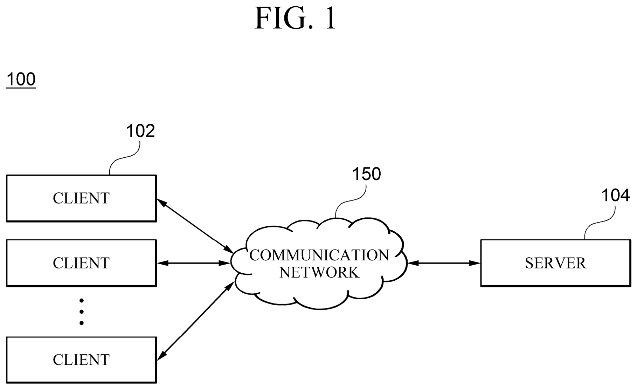

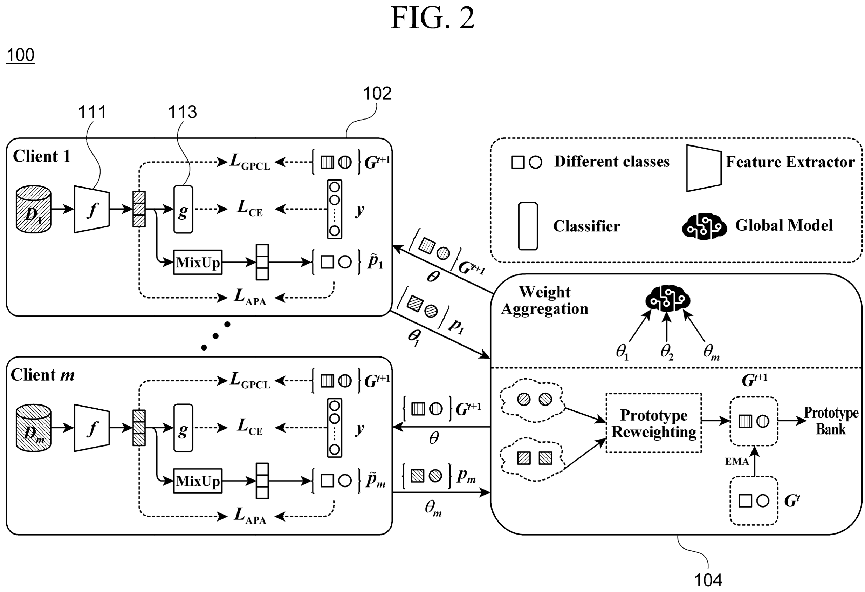

FIG. 1 is a diagram illustrating the configuration of a federated learning system according to an embodiment of the present disclosure, and FIG. 2 is a diagram for describing the operation of a federated learning system according to an embodiment of the present disclosure.

Referring to FIGS. 1 and 2, a federated learning system 100 may include a plurality of clients 102 and a server 104. In the federated learning system 100, federated learning may be performed in a situation where a domain shift exists.

The plurality of clients 102 are communicatively connected to the server 104 via a communication network 150. Here, the communication network 150 may include the Internet, one or more local area networks (LANs), wide area networks (WANs), cellular networks, mobile networks, other types of networks, or a combination of these networks.

Each client 102 possesses unique private data (i.e., local data) $D_m = \{x_i^m, y_i^m\}$, where $x_i^m$ represents a sample and $y_i^m$ represents a label corresponding to the sample. Each client 102 possesses local data with different feature distributions $P_m(x)$, but a label distribution $P_m(y)$ may remain consistent across multiple clients.

Each client 102 may have a local model with the same structure. Each local model may include a feature extractor 111 and a classifier 113. The feature extractor 111 may receive the sample $x_i^m$ (i.e., local data) as input and extract a feature vector. The classifier 113 may receive the feature vector from the feature extractor 111 and output a logit $z_{cls}$ to perform classification for the class of the corresponding sample. Each client 102 may train a local model using a loss function (e.g., cross entropy loss) that minimizes a difference between an output value of the classifier 113 and a correct value (i.e., a label of the corresponding sample).

Each client 102 may receive a generalized prototype for each class from the server 104. The generalized prototype is intended to provide unbiased inter-domain knowledge during local training. The details of generating the generalized prototype in the server 104 will be described below. Each client 102 may perform contrast learning between the feature vector (i.e., the local feature) and the generalized prototype.

That is, each client 102 may train the local model to make the feature vector closer to a generalized prototype that has the same semantic class as the feature vector, and to make the feature vector farther away from a generalized prototype that has a different semantic class. Here, the loss function $\mathcal{L}_{GPCL}$ for contrastive learning (GPCL: generalized prototype contrastive learning) may be expressed by Equation 1.

Equation 1

$$\mathcal{L}_{GPCL} = -\frac{1}{B}\sum_{i=1}^{B}\log\frac{\exp(s(h_i, g^+)/\tau)}{\sum_{g^k \in G}\exp(s(h_i, g^k)/\tau)}$$

B: batch size
$h_i$: feature vector of i-th sample
$g^+$: generalized prototype with same semantic class as feature vector
$g^k$: generalized prototype with different semantic classes than feature vector.
$s(u, v)$: cosine similarity between u and v
$\tau$: preset temperature parameter

Using the contrast loss by Equation 1, clients 102 possessing personal data of different domains may be induced to effectively acquire inter-domain knowledge from the generalized prototype. This enables improved generalization performance of local models and mitigation of the negative impact of domain skew in global training.

In addition, each client 102 may perform an augmentation technique on the feature vector extracted from the feature extractor 111 to generate augmented features. In an embodiment, each client 102 may perform a MixUp-style augmentation on the feature vector to generate augmented features, but the augmentation technique is not limited thereto.

Here, each client 102 performs augmentation not at the input stage of personal data, but at the feature vector stage, that is, within the embedding feature space, thereby generating augmented features that possess richer semantic representations and less domain-specific bias.

In an embodiment, each client 102 may generate augmented features by synthesizing a feature vector of a sample belonging to a different class from the corresponding feature vector with the corresponding feature vector through linear interpolation. The augmented feature $\bar{h}_i$ may be expressed through Equation 2 below.

**Equation 2**

$$\tilde{h}_i = \gamma h_i + (1 - \gamma)h_j$$

$h_i$: feature vector of i-th sample
$h_j$: random feature vector belonging to different class than feature vector of i-th sample
$\gamma$: preset hyper-parameter

Each client 102 may generate an augmented prototype for each class based on the augmented features. In an embodiment, each client 102 may generate an augmented prototype of each class by calculating an average of the augmented features belonging to that class. In this case, the augmented prototype for each class may be calculated by Equation 3 below.

**Equation 3**

$$\tilde{p}_m^k = \frac{1}{|S_m^k|} \sum_{i \in S_m^k} \tilde{h}_i$$

$\tilde{p}_m^k$ : augmented prototype for k-th class of m-th client  $S_m^k$ : set of personal data belonging to k-th class

Each client 102 may train a local model using a loss function based on a difference between the feature vector and the augmented prototype. In this case, the loss function $\mathcal{L}_{APA}$ (APA: augmented prototype alignment) may be expressed by Equation 4 below.

**Equation 4**

$$\mathcal{L}_{APA} = \sum_{k} \|h_m^k - \tilde{p}_m^k\|_2^2$$

$h_m^k$ : feature vector belonging to k-th class in m-th client

That is, according to the loss function $\mathcal{L}_{APA}$ of Equation 4, alignment between the feature vector and the augmented prototype of each class may be induced. This alignment enables the local model to be trained in a domain-independent manner, thereby improving the generalization ability thereof.

In this way, by generating the augmented prototype, which is an intra-domain prototype on the client side, the diversity of local personal data can be increased and the overfitting problem that occurs when each client possesses personal data limited to a specific domain can be mitigated.

Here, each client 102 may be trained through the total loss function such as Equation 5 below.

**Equation 5**

$$\mathcal{L} = \mathcal{L}_{CE} + \mathcal{L}_{APA} + \mathcal{L}_{GPCL}$$

$\mathcal{L}_{CE}$ : cross entropy loss function that minimizes difference between output value of classifier and correct value

$\mathcal{L}_{APA}$ : loss function based on difference between feature vector and augmented prototype

$\mathcal{L}_{GPCL}$ : loss function for contrastive learning between feature vectors and generalized prototypes

In addition, each client 102 may generate a local prototype for each class based on the feature vector. In an embodiment, each client 102 may generate the local prototype of each class by calculating an average of the feature vectors belonging to that class. In this case, the local prototype for each class may be calculated by Equation 6 below.

Equation 6

$$p_m^k = \frac{1}{|S_m^k|} \sum_{i \in S_m^k} h_i$$

$p_m^k$ : local prototype for k-th class of m-th client

$h_i$: feature vector of i-th sample

$S_m^k$ : set of individual data (samples) belonging to k-th class

Each client 102 may transmit the local prototype for each class to the server 104. The local prototype for each class may be used to generate a generalized prototype in the server 104. Hereinafter, a process of generating the generalized prototype in the server 104 will be described in detail.

The server 104 may receive and aggregate local prototypes for each class from clients 102. The server 104 may generate an initial global prototype of each class based on the local prototypes for each class aggregated from clients 102. In an embodiment, the server 104 may generate the initial global prototype for each class by averaging the local prototypes for each class aggregated from clients 102. In this case, the initial global prototype of each class may be expressed by Equation 7 below.

Equation 7

$$\mu^k = \frac{1}{M} \sum_{m=1}^{M} p_m^k$$

$\mu^k$ : : initial global prototype for k-th class
M: number of clients

Meanwhile, in a domain-shift environment, the initial global prototype may be distorted due to a sample distribution biased toward a specific domain. Accordingly, in the disclosed embodiments, a generalized prototype may be generated by readjusting the weight based on a distance between the local prototype and initial global prototype of each class.

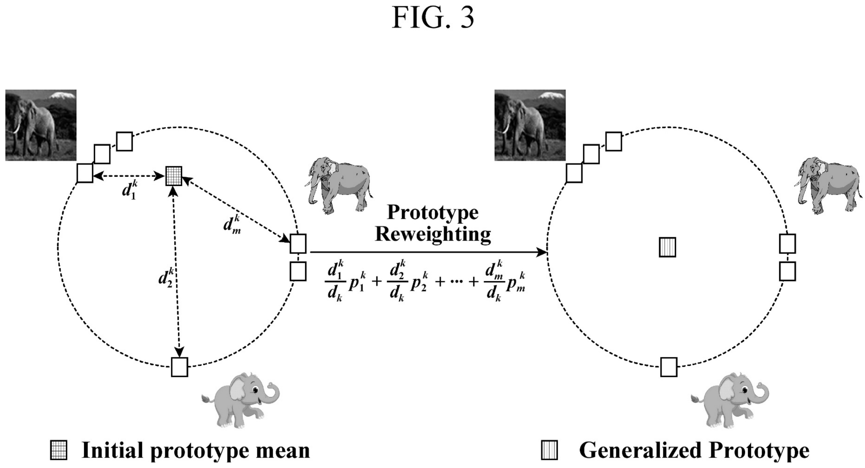

That is, the server 104 may generate the generalized prototype through prototype reweighting. FIG. 3 is a diagram illustrating a state in which a generalized prototype is generated by applying prototype reweighting to an initial global prototype in an embodiment of the present disclosure.

The server 104 may generate the generalized prototype by assigning a greater weight as the distance between the local prototype and the initial global prototype increases and by assigning a smaller weight as the distance between the local prototype and the initial global prototype decreases. The server 104 may generate the generalized prototype of each class by Equation 8 below.

Equation 8

$$g^k = \sum_{m=1}^{M} \frac{d_m^k}{d^k} p_m^k$$

$g^k$: generalized prototype for k-th class

$d_m^k$ : distance between local prototype and initial global prototype for k-th class of m-th client

$d^k$: sum of distances between local prototype and initial prototype of k-th class of clients ( $d^k = \sum d_m^k$ ).

The server 104 may transmit a generalized prototype G of each class to each client 102. Here, $G = [g^1, g^2, \ldots, g^K]$, and K is the number of classes.

In addition, the server 104 may update the generalized prototype of each class for each round. In an embodiment, the server 104 may apply an update thereto using an exponential moving average (EMA). After round t, the generalized prototype may be updated by Equation 9.

Equation 9

$$G^{t+1} = \beta G^{t+1} + (1 - \beta)G^t$$

$\beta$ : preset decay rate

According to the disclosed embodiment, by generating an augmented prototype, which is an intra-domain prototype at the client side, richer semantic information can be extracted from the feature vector of local personal data and the generalization ability can be strengthened during the subsequent prototype aggregation process.

In addition, by providing a generalized prototype for each class to each client, it is possible to local training can be performed by utilizing inter-domain knowledge, thereby mitigating the domain skew problem.

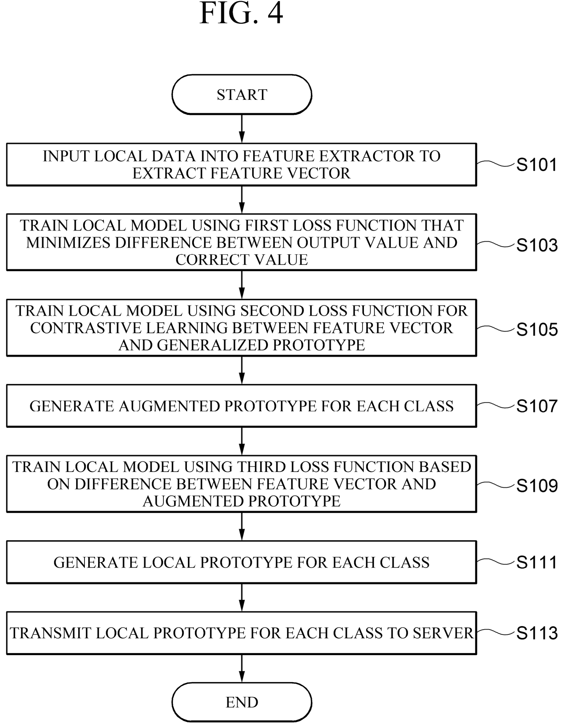

FIG. 4 is a flowchart illustrating a federated learning method according to an embodiment of the present disclosure. Although the method is described as being divided into a plurality of steps in the illustrated flowchart, at least some of the steps may be performed in a different order, combined with other steps to be performed together, omitted, divided into sub-steps, or performed by adding one or more steps (not shown).

Referring to FIG. 4, the client 102 may input local data into the feature extractor 111 to extract a feature vector (S 101).

Next, the client 102 may input the feature vector into the classifier 113 and train the local model using a first loss function that minimizes a difference between an output value thereof and a correct value (S 103).

Next, the client 102 may receive a generalized prototype of each class from the server 104 and train the local model using a second loss function for contrastive learning between the feature vector and the generalized prototype (S 105).

Next, the client 102 may perform an augmentation technique on the feature vector to generate augmented features, and generate an augmented prototype for each class based on the generated augmented features (S 107).

Next, the client 102 may train the local model using a third loss function based on the difference between the feature vector and the augmented prototype (S 109).

Next, the client 102 may generate a local prototype for each class based on the feature vector (S 111) and transmit the local prototype for each class to the server 104 (S 113).

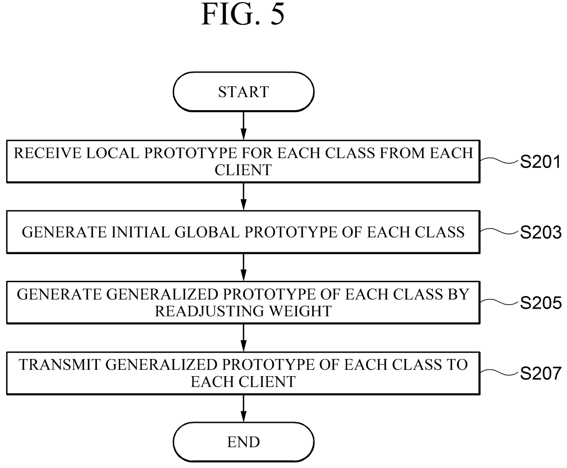

FIG. 5 is a flowchart illustrating a federated learning method according to another embodiment of the present disclosure. Although the method is described as being divided into a plurality of steps in the illustrated flowchart, at least some of the steps may be performed in a different order, combined with other steps to be performed together, omitted, divided into sub-steps, or performed by adding one or more steps (not shown).

Referring to FIG. 5, the server 104 may receive local prototypes for each class from clients 102 (S 201).

Next, the server 104 may generate an initial global prototype for each class based on the local prototypes for each class aggregated from clients 102 (S 203).

Next, the server 104 may generate a generalized prototype for each class by readjusting a weight based on a distance between the local prototype and the initial global prototype of each class (S 205).

Next, the server 104 may transmit a generalized prototype of each class to each client 102 (S 207).

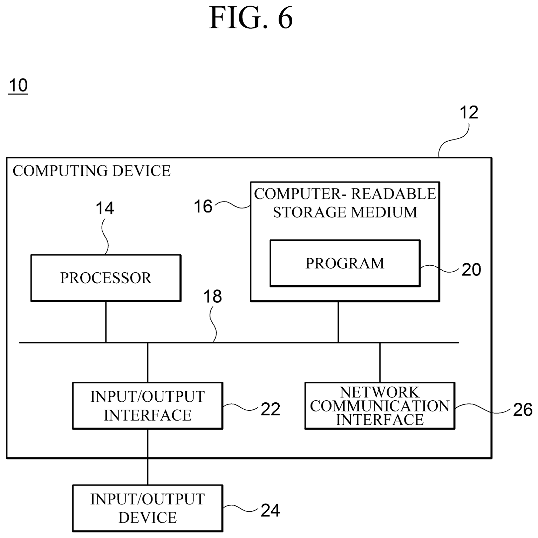

FIG. 6 is a block diagram for illustrating a computing environment 10 including a computing device suitable for use in exemplary embodiments. In the illustrated embodiment, respective components may have different functions and capabilities other than those described below, and include additional components in addition to those described below.

The illustrated computing environment 10 includes a computing device 12. The computing device 12 may be a device for performing federated learning in an environment where domain shift exists. In an embodiment, the computing device 12 may be the client 102. Furthermore, the computing device 12 may be the server 104.

The computing device 12 includes at least one processor 14, a computer-readable storage medium 16, and a communication bus 18. The processor 14 may cause the computing device 12 to operate according to the exemplary embodiment described above. For example, the processor 14 may execute one or more programs stored on the computer-readable storage medium 16. The one or more programs may include one or more computer-executable instructions, which, when executed by the processor 14, may be configured so that the computing device 12 performs operations according to the exemplary embodiment.

The computer-readable storage medium 16 is configured to store the computer-executable instruction or program code, program data, and/or other suitable forms of information. A program 20 stored in the computer-readable storage medium 16 includes a set of instructions executable by the processor 14. In an embodiment, the computer-readable storage medium 16 may be a memory (volatile memory such as a random access memory, non-volatile memory, or any suitable combination thereof), one or more magnetic disk storage devices, optical disk storage devices, flash memory devices, other types of storage media that are accessible by the computing device 12 and capable of storing desired information, or any suitable combination thereof.

The communication bus 18 interconnects various other components of the computing device 12, including the processor 14 and the computer-readable storage medium 16.

The computing device 12 may also include one or more input/output interfaces 22 that provide an interface for one or more input/output devices 24, and one or more network communication interfaces 26. The input/output interface 22 and the network communication interface 26 are connected to the communication bus 18. The input/output device 24 may be connected to other components of the computing device 12 through the input/output interface 22. The exemplary input/output device 24 may include a pointing device (such as a mouse or trackpad), a keyboard, a touch input device (such as a touch pad or touch screen), a speech or sound input device, input devices such as various types of sensor devices and/or photographing devices, and/or output devices such as a display device, a printer, a speaker, and/or a network card. The exemplary input/output device 24 may be included inside the computing device 12 as a component configuring the computing device 12, or may be connected to the computing device 12 as a separate device distinct from the computing device 12.

According to the disclosed embodiments, by generating an augmented prototype, which is an intra-domain prototype at the client side, richer semantic information can be extracted from the feature vector of local personal data and the generalization ability can be strengthened during the subsequent prototype aggregation process.

Furthermore, by providing a generalized prototype for each class to each client, local training can be performed by utilizing inter-domain knowledge, thereby mitigating domain skew problem.

Although representative embodiments of the present disclosure have been described in detail above, those skilled in the art will understand that various modifications may be made to the above-described embodiments without departing from the scope of the present disclosure. Therefore, the scope of protection of the present disclosure should not be limited to the described embodiments, but should be defined not only by the patent claims described below but also by those equivalent to the patent claims.

**Claims**

1. A multimodal federated learning method performed on a computing device including one or more processors and a memory that stores one or more programs executed by the one or more processors, and being a client that performs federated learning with a server, the federated learning method comprising:

    inputting local data into a feature extractor to extract a feature vector;
    inputting the feature vector into a classifier to perform classification for a class of the local data;
    receiving a generalized prototype of each class from the server; and
    training a local model, which includes the feature extractor and the classifier, using a first loss function based on a difference between an output value of the classifier and a preset correct value and a second loss function for contrastive learning between the feature vector and the generalized prototype of each class.

2. The multimodal federated learning method of claim 1, wherein the generalized prototype is generated by readjusting a weight of an initial global prototype based on a distance between a local prototype of each class and the initial global prototype, and
the initial global prototype is generated by aggregating local prototypes for each class of each client.

3. The multimodal federated learning method of claim 2, wherein the generalized prototype is generated by assigning a greater weight to the initial global prototype as the distance between the local prototype and the initial global prototype increases, and by assigning a smaller weight to the initial global prototype as the distance between the local prototype and the initial global prototype decreases.

4. The multimodal federated learning method of claim 1, wherein the second loss function causes the feature vector to be closer to a generalized prototype having the same class as the feature vector, and to be further away from a generalized prototype having a different class from the feature vector.

5. The multimodal federated learning method of claim 1, further comprising generating an augmented prototype for each class based on the feature vector.

6. The multimodal federated learning method of claim 5, wherein the generating of the augmented prototype includes:

   generating augmented features by augmenting the feature vector; and
   generating an augmented prototype for each class by calculating an average of the augmented features belonging to that class.

7. The multimodal federated learning method of claim 5, further comprising training the local model using a third loss function based on a difference between the feature vector and the augmented prototype for each class.

8. A multimodal federated learning method performed on a computing device including one or more processors and a memory that stores one or more programs executed by the one or more processors, and being a server that performs federated learning with a plurality of clients, the federated learning method comprising:

   receiving local prototypes for each class from clients;
   generating an initial global prototype of each class based on the local prototypes for each class received from the clients;
   generating a generalized prototype of each class by readjusting a weight for the initial global prototype; and
   transmitting the generalized prototype for each class to each of the clients.

9. The multimodal federated learning method of claim 8, wherein, in the generating of the generalized prototype, the generalized prototype is generated by readjusting a weight of an initial global prototype based on a distance between the local prototype and the initial global prototype of each class.

10. The multimodal federated learning method of claim 9, wherein, in the generating of the generalized prototype, a greater weight is assigned to the initial global prototype as the distance between the local prototype and the initial global prototype increases) and a smaller weight is assigned to the initial global prototype as the distance between the local prototype and the initial global prototype decreases.

11. A federated learning system comprising:

   a plurality of clients; and
   a server,
   wherein each client is configured to input local data into a feature extractor to extract a feature vector, input the feature vector into a classifier to perform classification for a class of the local data, and train a local model, which includes the feature extractor and the classifier, using a first loss function based on a difference between an output value of the classifier and a preset correct value and a second loss function for contrastive learning between the feature vector and the generalized prototype of each class.

12. The federated learning system of claim 11, wherein each client is configured to generate local prototypes for each class based on the feature vector and transmits the local prototypes for each class to the server, and
the server is configured to generate an initial global prototype of each class based on the local prototypes for each class received from the clients, generate a generalized prototype for each class by readjusting a weight for the initial global prototype, and transmit the generalized prototype of each class to each of the clients.

13. The federated learning system of claim 12, wherein the server is configured to generate the generalized prototype of each class by assigning a greater weight to the initial global prototype as a distance between the local prototype and the initial global prototype increases, and by assigning a smaller weight to the initial global prototype as the distance between the local prototype and the initial global prototype decreases.

14. The federated learning system of claim 11, wherein each client is configured to generate augmented features by augmenting the feature vector and generate an augmented prototype of each class by calculating an average of the augmented features belonging to that class.

15. The federated learning system of claim 14, wherein each client is configured to further training the local model using a third loss function based on a difference between the feature vector and the augmented prototype for each class.

# FIG. 1

<u>100</u>

FIG. 2

# FIG. 3

Initial prototype mean     Generalized Prototype

Prototype Reweighting

$$\frac{d_1^k}{d_k} p_1^k + \frac{d_2^k}{d_k} p_2^k + \cdots + \frac{d_m^k}{d_k} p_m^k$$

$d_1^k$

$d_2^k$

$d_m^k$

EP 4 764 959 A1

# FIG. 4

START

INPUT LOCAL DATA INTO FEATURE EXTRACTOR TO EXTRACT FEATURE VECTOR — S101

TRAIN LOCAL MODEL USING FIRST LOSS FUNCTION THAT MINIMIZES DIFFERENCE BETWEEN OUTPUT VALUE AND CORRECT VALUE — S103

TRAIN LOCAL MODEL USING SECOND LOSS FUNCTION FOR CONTRASTIVE LEARNING BETWEEN FEATURE VECTOR AND GENERALIZED PROTOTYPE — S105

GENERATE AUGMENTED PROTOTYPE FOR EACH CLASS — S107

TRAIN LOCAL MODEL USING THIRD LOSS FUNCTION BASED ON DIFFERENCE BETWEEN FEATURE VECTOR AND AUGMENTED PROTOTYPE — S109

GENERATE LOCAL PROTOTYPE FOR EACH CLASS — S111

TRANSMIT LOCAL PROTOTYPE FOR EACH CLASS TO SERVER — S113

END

# FIG. 5

START

RECEIVE LOCAL PROTOTYPE FOR EACH CLASS FROM EACH CLIENT — S201

GENERATE INITIAL GLOBAL PROTOTYPE OF EACH CLASS — S203

GENERATE GENERALIZED PROTOTYPE OF EACH CLASS BY READJUSTING WEIGHT — S205

TRANSMIT GENERALIZED PROTOTYPE OF EACH CLASS TO EACH CLIENT — S207

END

# FIG. 6

<u>10</u>

EP 4 764 959 A1

# EUROPEAN SEARCH REPORT

**Application Number**

EP 25 22 1843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XUTONG MU ET AL: "FedProc: Prototypical Contrastive Federated Learning on Non-IID data", ARXIV.ORG CORNELL UNIVERSITY LIBRARY, 201 OLIN LIBRARY CORNELL UNIVERSITY ITHACA, NY 14853, 25 September 2021 (2021-09-25), XP091057815, * page 1 - page 5 * ----- | 1-15 | INV. G06N3/09 G06N3/098 |
| X | YU QIAO ET AL: "MP-FedCL: Multiprototype Federated Contrastive Learning for Edge Intelligence", ARXIV.ORG CORNELL UNIVERSITY LIBRARY, 201 OLIN LIBRARY CORNELL UNIVERSITY ITHACA, NY 14853, 11 October 2023 (2023-10-11), XP091632221, * page 1 - page 9 * ----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 9 April 2026 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240193233
- KR 20230114530